# FASCICULE DE BREVET EUROPEEN

(11) **EP 2 280 799 B1**
(45) Date de publication et mention de la délivrance du brevet: **18.01.2012**
(21) Numéro de dépôt: 09745989.5
(22) Date de dépôt: 24.04.2009
(51) Int. Cl.: B23K 1/00, B23K 1/008, B23K 3/08, F28D 9/00, F28F 3/00

(54) **PROCÉDÉ DE FABRICATION D'UN ÉCHANGEUR DE CHALEUR UTILISANT UNE CALE POUR LE MAINTIEN DES PASSAGES D'ÉCHANGEURS À PLAQUES ET AILETTES BRASÉS**
VERFAHREN ZUR HERSTELLUNG EINES WÄRMETAUSCHERS MITHILFE EINES ABSTANDSSTÜCKS ZUR OFFENHALTUNG DER ZWISCHENRÄUME GELÖTETER PLATTEN SOWIE RIPPENWÄRMETAUSCHER
METHOD OF PRODUCING A HEAT EXCHANGER USING A SPACER PIECE FOR HOLDING OPEN THE PASSAGES OF BRAZED PLATES AND FIN EXCHANGERS

(30) Priorité: 28.04.2008 FR 0852843
(43) Date de publication de la demande: 09.02.2011
(73) Titulaire: L'Air Liquide Société Anonyme pour l'Etude et l'Exploitation des Procédés Georges Claude, 75007 Paris (FR)
(72) Inventeur: CRAYSSAC, Frédéric, F-78140 Velizy (FR); DESCHODT, Sophie, F-59120 Loos (FR); TRANIER, Jean-Pierre, F-94240 L'Hay-les-Roses (FR); WAGNER, Marc, F-94100 Saint Maur des Fosses (FR)
(74) Mandataire: Mercey, Fiona Susan
(86) Numéro de dépôt international: PCT/FR2009/050757
(87) Numéro de publication internationale: WO 2009/138670

(56) Documents cités:
- FR-A- 2 887 020
- GB-A- 1 072 202
- JP-A- 4 178 217
- JP-A- 63 227 991
- US-A- 4 240 270
- US-A- 4 715 433

## Description

La présente invention concerne un procédé de fabrication d'un échangeur de chaleur à plaques conformément à la revendication 1.

Les échangeurs de chaleur à plaques sont généralement constitués d'un empilement de plaques délimitant des passages pour des fluides.

Afin d'améliorer l'échange thermique entre les fluides, des tôles ondulées, appelées ailettes ou ondes, peuvent être placées en sandwich entre lesdites plaques constituant l'échangeur de chaleur. Les passages ainsi formés sont fermés latéralement par des barres latérales. L'échangeur de chaleur ainsi monté est ensuite brasé afin d'assurer une tenue de l'ensemble ainsi qu'un meilleur contact thermique.

Les échangeurs de chaleur à plaques peuvent être réalisés en aluminium ou en alliage d'aluminium afin d'assurer une bonne conductivité thermique et une bonne tenue mécanique.

Les échangeurs de l'état de la technique, par exemple décrits dans FR-A-2 815 895, permettent d'échanger la chaleur de nombreux fluides, par exemple plus de 5 fluides. Les ondes d'échange, généralement utilisées, ont à la fois une fonction thermique en augmentant la surface d'échange et en améliorant l'efficacité thermique de l'échangeur, et une fonction mécanique en assurant la tenue mécanique de l'échangeur de chaleur lors du brasage et en évitant le flambage des passages. Ainsi, il peut arriver que la tenue mécanique soit l'élément dimensionnant l'ensemble. En particulier, l'onde n'est alors plus optimisée thermiquement.

Il est alors connu de substituer lesdites ondes d'échange par un revêtement amélioré sur les plaques séparatrices. Il peut également, dans certains cas, être intéressant de réduire la densité de l'onde, voire de la supprimer complètement pour éviter de masquer la surface améliorée de la plaque avec ladite onde.

Il convient alors de mettre au point un procédé de fabrication d'un échangeur de chaleur qui permet d'assurer la tenue mécanique dudit échangeur au cours de l'étape de brasage.

Le but de l'invention est de proposer, en particulier au fabricant d'échangeurs de chaleur à plaques, un procédé de fabrication dudit échangeur qui soit facile à mettre en oeuvre et qui assure une bonne tenue mécanique dudit échangeur pendant l'étape de brasage.

L'invention propose ainsi un procédé de fabrication d'un échangeur de chaleur à plaques conformément à la revendication 1.

Avantageusement, l'introduction d'au moins une cale amovible entre les deux plaques, permet d'assurer une tenue mécanique suffisante lors du brasage et/ou de la manutention dudit échangeur de chaleur.

En conséquence, l'ensemble de cales amovible est retiré après l'étape de brasage, libérant ainsi de l'espace dans le circuit de circulation de fluide.

L'introduction de la cale entre les plaques préalablement disposées permet d'obtenir un procédé simple. En effet, il n'est pas nécessaire de disposer la ou les cale(s) lors de l'empilement des plaques composant l'échangeur, la ou les cale(s) peuvent être introduites au cours d'une étape ultérieure. La ou les cales sont introduites sans endommager l'empilement de plaques séparées par les barres latérales, et facilement positionnées grâce à leur rotation entre les plaques.

Un procédé selon l'invention peut en outre comporter l'une ou plusieurs des caractéristiques optionnelles suivantes, considérées individuellement ou selon toutes les combinaisons possibles :
- avant l'étape où l'on enlève la cale amovible, le procédé comprend une étape où l'on procède à la rotation de ladite cale amovible selon l'axe longitudinal de manière à ce que les extrémités de ladite cale amovible ne contactent plus simultanément les plaques ;
- la cale amovible présente une section sensiblement constante le long dudit axe longitudinal de la cale et en ce que cette section présente sensiblement la forme d'un polygone, deux pointes dudit polygone formant les extrémités espacées d'une distance sensiblement égale à e ;
- le polygone est un losange dont une diagonale a sensiblement une longueur de e et l'autre diagonale une longueur inférieure à e ;
- le polygone est un hexagone avec deux côtés principaux parallèles et quatre petits segments réunis deux par deux pour former chacun une pointe à chaque extrémité des côtés principaux ; la distance entre lesdites pointes étant sensiblement égale ou supérieure à e ;
- la cale amovible présente une section sensiblement constante le long de l'axe longitudinal de la cale et cette section présente une forme sensiblement elliptique, les deux extrémités du grand axe de l'ellipse formant les extrémités espacées d'une distance sensiblement égale à e ;
- une étape où l'on sélectionne la cale amovible de manière à ce qu'elle soit constituée d'un ou plusieurs matériaux dont la température de fusion est supérieure ou égale à 900°C.

L'invention sera mieux comprise à la lecture de la description qui va suivre, donnée uniquement à titre d'exemple.

Au sens de l'invention, on entend par « cale amovible » une cale qui, après l'étape de brasage de l'échangeur, peut être enlevée et réutilisée sans modification structurelle dans un autre procédé de fabrication selon l'invention.

Un procédé de fabrication selon l'état de l'art le plus proche (voir, par example, GB1 072 202) comprend les étapes successives suivantes :
a) on assemble ledit échangeur de chaleur à plaques,
b) on sélectionne une pluralité de cales amovibles,
c) on introduit au moins une cale amovible, de préférence plusieurs, entre les plaques dudit échangeur de chaleur préalablement assemblé,
d) on brase ledit échangeur,
e) on enlève lesdites cales amovibles d'entre les plaques de l'échangeur de chaleur brasé.

Les étapes d'assemblage a) et de brasage d) sont bien connues de l'homme du métier. La brasure est effectuée en introduisant l'échangeur dans un four porté à température adéquate pour la réalisation de la brasure, par exemple 600°C.

Trois modes de réalisation d'une cale selon l'invention sont décrits ci-dessous à titre d'exemples non limitatifs.

Selon un premier mode de réalisation, on sélectionne à l'étape b) une pluralité de cales amovibles présentant une section sensiblement constante le long de leur axe principal et ladite section présentant une forme en losange.

On entend par « losange » tout polygone simple à quatre côtés équilatéraux.

Selon ce premier mode de réalisation, chaque cale est sélectionnée de manière à ce que la grande diagonale de sa section présente une longueur supérieure ou égale à la distance entre les plaques de l'échangeur entre lesquelles ladite cale est destinée à être introduite et la petite diagonale de sa section présente une longueur inférieure ou égale à la distance entre les plaques de l'échangeur entre lesquelles ladite cale est destinée à être introduite.

Avantageusement, la sélection d'une telle cale permet de la disposer entre deux plaques de l'échangeur de manière à ce que la surface de contact de ladite cale avec la plaque, soit inférieure ou égale à 15 % de la surface totale de ladite cale, de préférence inférieure ou égale à 5 % de la surface totale de ladite cale.

Plus la surface de contact entre la cale et les plaques entre lesquelles ladite cale est introduite est faible, moins il y a de risque qu'au cours de l'étape de brasage ladite cale soit soudée aux dites plaques.

Selon ce premier mode de réalisation, les cales sélectionnées sont disposées entre les plaques d'un échangeur de chaleur préalablement assemblé.

Cette étape de mise en place des cales peut comprendre deux sous-étapes. On peut dans un premier temps introduire chaque cale entre deux plaques avec une orientation telle que la grande diagonale de la section de ladite cale se trouve dans un plan sensiblement parallèle au plan défini par les plaques.

Avantageusement, la cale ayant été sélectionnée de manière à ce que la petite diagonale de sa section présente une longueur inférieure ou égale à la distance entre les plaques de l'échangeur entre lesquelles ladite cale est destinée à être introduite, ladite cale peut être introduite sans difficulté entre les deux plaques.

Dans un deuxième temps, une fois ladite cale introduite entre deux plaques de l'échangeur, on peut pivoter la cale autour de son axe principal de manière à positionner la cale en butée entre les deux plaques.

Avantageusement, la cale ainsi positionnée, permet d'assurer une bonne tenue mécanique de l'échangeur de chaleur au cours de l'étape de brasage.

Toujours selon ce premier mode de réalisation, le procédé comprend une étape après l'étape de brasage où l'on enlève la ou les cale(s) amovible(s) d'entre les plaques de l'échangeur de chaleur brasé.

Avantageusement, les cales sélectionnées ne sont pas soudées aux plaques au cours de l'étape de brasage, grâce en particulier à une surface de contact réduite entre ladite cale et les plaques.

Selon ce premier mode de réalisation, chaque cale amovible peut être enlevée en la faisant pivoter autour de son axe principal de manière à l'orienter telle que la grande diagonale de sa section se trouve dans un plan sensiblement parallèle aux plaques.

Avantageusement, l'étape d'enlèvement des cales s'en trouve facilité.

Selon un deuxième mode de réalisation la section de la cale amovible à la forme d'un hexagone avec deux côtés principaux, parallèles entre eux, constituant les plus grands côtés, et quatre petits côtés, de longueur inférieure aux grands côtés. Les petits côtés partent chacun d'une extrémité d'un grand côté, et se rejoignent deux à deux pour former une première extrémité sous forme de pointe. La distance entre les deux premières extrémités sous forme de pointe est supérieure ou égale à e alors que la distance entre les deux côtés principaux formant les deux deuxièmes extrémités est inférieure à e.

Selon un troisième mode de réalisation, on sélectionne à l'étape b) une pluralité de cales amovibles présentant une section sensiblement constante le long de leur axe principal et ladite section présentant une forme en ellipse.

Selon ce troisième mode de réalisation, chaque cale est sélectionnée de manière à ce que le grand axe de sa section présente une longueur supérieure ou égale à la distance entre les plaques de l'échangeur entre lesquelles ladite cale est destinée à être introduite et le petit axe de sa section présente une longueur inférieure ou égale à la distance entre les plaques de l'échangeur entre lesquelles ladite cale est destinée à être introduite.

La sélection d'une telle cale présente des avantages similaires à celle du premier mode de réalisation décrit. En particulier, la surface de contact de ladite cale, une fois positionnée entre les plaques, peut être inférieure ou égale à 15 % de la surface totale de la cale, de préférence inférieure ou égale à 5 % de la surface totale de ladite cale.

Les cales sélectionnées au cours d'un procédé selon l'invention sont de préférence constituées d'un ou de plusieurs matériaux dont la température de fusion est supérieure à la température de brasage, par exemple supérieure ou égale à 900°C, ou encore supérieure ou égale à 1 500 °C. Les cales sélectionnées peuvent par exemple être en acier inoxydable.

Un procédé selon l'invention peut en outre comprendre une étape où l'on recouvre les cales sélectionnées d'un produit empêchant ou limitant le brasage pendant la phase de brasage.

Avantageusement, l'utilisation d'un tel produit permet de faciliter l'étape d'enlèvement des cales.

L'invention ne se limite pas aux modes de réalisation décrits et doit être interprétée de façon non limitative et englobant tout mode de réalisation équivalent. En particulier, l'invention est applicable à tout type d'échangeur de chaleur à plaques assemblé par brasage. En particulier, le procédé selon l'invention peut être mis en oeuvre avec des cales présentant des sections différentes des modes de réalisation décrits, par exemple d'autres sections polygonales.

## Revendications

1. Procédé de fabrication d'un échangeur de chaleur à plaques du type comprenant une pluralité de plaques définissant avec des barres latérales disposées sur les plaques, des circuits pour la circulation de fluides, comprenant au moins les étapes successives suivantes :
- on approvisionne un empilement d'une pluralité de plaques séparées par des barres latérales, dont au moins deux plaques sont séparées par des barres latérales d'un écart e ;
- on approvisionne au moins une cale amovible comprenant deux premières extrémités espacées d'une distance sensiblement égale ou supérieure à e et deux deuxièmes extrémités espacées d'une distance inférieure à e et conformée de manière à permettre une rotation entre deux plaques espacées d'un écart e selon un axe longitudinal situé au milieu de la ligne rejoignant lesdites extrémités ;
- on introduit ladite cale amovible entre lesdites plaques espacées d'un écart e de manière à présenter les deux deuxièmes extrémités de la carte ayant l'épaisseur inférieure ou égale à la distance e de sorte que lesdites deuxièmes extrémités ne contactent pas simultanément lesdites plaques ;
- on procède à la rotation de ladite cale amovible selon ledit axe longitudinal de manière à ce que lesdites premières extrémités de ladite cale amovible contactent lesdites plaques ;
- on brase ledit échangeur ; et
- on enlève ladite cale amovible.

2. Procédé selon la revendication 1, **caractérisé en ce qu'**avant l'étape où l'on enlève ladite cale amovible, le procédé comprend une étape où l'on procède à la rotation de ladite cale amovible selon ledit axe longitudinal de manière à ce que ni les premières ni les deuxièmes extrémités de ladite cale amovible ne contactent simultanément lesdites plaques.

3. Procédé selon l'une des revendications 1 ou 2, **caractérisé en ce que** la cale amovible présente une section sensiblement constante le long dudit axe longitudinal de ladite cale et **en ce que** cette section présente sensiblement la forme d'un polygone, deux pointes dudit polygone formant les premières extrémités espacées d'une distance sensiblement égale à e.

4. Procédé selon la revendication 3 **caractérisé en ce que** le polygone est un losange dont une diagonale a entre les premières extrémités sensiblement une longueur de e et l'autre diagonale entre les deuxièmes extrémités une longueur inférieure à e.

5. Procédé selon la revendication 3, **caractérisé en ce que** le polygone est un hexagone avec deux côtés principaux parallèles et quatre petits segments réunis deux par deux pour former chacun une pointe à chaque extrémité des côtés principaux, la distance entre lesdites pointes étant égale ou supérieure à e.

6. Procédé selon l'une des revendications 1 ou 2, **caractérisé en ce que** la cale amovible présente une section sensiblement constante le long de dudit axe longitudinal de ladite cale et **en ce que** cette section présente une forme sensiblement elliptique, les deux extrémités du grand axe de l'ellipse formant les premières extrémités espacées d'une distance sensiblement égale à e.

7. Procédé selon l'une quelconque des revendications précédentes, **caractérisé en ce qu'**il comprend une étape où l'on sélectionne ladite cale amovible de manière à ce qu'elle soit constituée d'un ou plusieurs matériaux dont la température de fusion est supérieure ou égale à 900 °C.

8. Procédé selon l'une quelconque des revendications précédentes dans lequel les deux premières extrémités espacées d'une distance sensiblement égale à e .

9. Procédé selon l'une des revendications 1 à 7 dans lequel deux premières extrémités espacées d'une distance supérieure à e.

## Claims

1. Method of manufacturing a plate-type heat exchanger of the type comprising a plurality of plates defining, with lateral bars arranged on the plates, circuits for the circulation of fluids, comprising at least the following successive steps:
- sourcing a stack of a plurality of plates separated by lateral bars, of which at least two plates are separated by lateral bars by a spacing e;
- sourcing at least one removable spacer piece comprising two first ends spaced apart by a distance substantially equal to or greater than e and two second ends spaced apart by a distance smaller than e and shaped in such a way as to allow rotation between two plates spaced apart by a spacing e about a longitudinal axis situated at the middle of the line joining said ends;
- introducing said removable spacer piece between said plates spaced apart by a spacing e so as to offer up the two second ends of the spacer piece which have the thickness that is smaller than or equal to the distance e such that said second ends are not simultaneously in contact with said plates;
- rotating said removable spacer piece about said longitudinal axis so that said first ends of said removable spacer piece come into contact with said plates;
- brazing said exchanger; and
- removing said removable spacer piece.

2. Method according to Claim 1, **characterized in that** prior to the step of removing said removable spacer piece, the method comprises a step of rotating said removable spacer piece about said longitudinal axis in such a way that neither the first nor the second ends of said removable spacer piece are simultaneously in contact with said plates.

3. Method according to one of Claims 1 and 2, **characterized in that** the removable spacer piece has a cross section that is substantially constant along said longitudinal axis of said spacer piece, and **in that** this cross section is substantially in the shape of a polygon, two points of said polygon forming the first ends that are spaced apart by a distance substantially equal to e.

4. Method according to Claim 3, **characterized in that** the polygon is a diamond of which one diagonal has, between the first ends, substantially a length of e and the other diagonal, between the second ends, a length less than e.

5. Method according to Claim 3, **characterized in that** the polygon is a hexagon with two parallel main sides and four small segments connected in pairs in order each to form a point at each end of the main sides, the distance between said points being equal to or greater than e.

6. Method according to one of Claims 1 and 2, **characterized in that** the removable spacer piece has a cross section that is substantially constant along said longitudinal axis of said spacer piece, and **in that** this cross section has a substantially elliptical shape, the two ends of the major axis of the ellipse forming the first ends spaced apart by a distance substantially equal to e.

7. Method according to any one of the preceding claims, **characterized in that** it comprises a step of selecting said removable spacer piece in such a way that it is made up of one or more materials the melting point of which is greater than or equal to 900°C.

8. Method according to any one of the preceding claims, in which the two first ends are spaced apart by a distance substantially equal to e.

9. Method according to one of Claims 1 to 7, in which two first ends are spaced apart by a distance greater than e.

## Patentansprüche

1. Verfahren zum Herstellen eines Plattenwärmetauschers des Typs, der mehrere Platten aufweist, die mit seitlichen Stäben, die auf den Platten angeordnet sind, Kreise für die Zirkulation von Fluiden definieren, das wenigstens die folgenden aufeinander folgenden Schritte umfasst:
- Bereitstellen eines Stapels mehrerer Platten, die durch seitliche Stäbe getrennt sind, wobei wenigstens zwei Platten hiervon durch seitliche Stäbe um einen Abstand e getrennt sind;
- Bereitstellen wenigstens eines entnehmbaren Keils, der zwei erste Enden, die um eine Strecke beabstandet sind, die im Wesentlichen gleich oder größer als e ist, und zwei zweite Enden, die um eine Strecke beabstandet sind, die kleiner als e ist, aufweist und in der Weise beschaffen ist, dass er eine Drehung zwischen zwei Platten, die um einen Abstand e beabstandet sind, um eine Längsachse ermöglicht, die sich in der Mitte der Linie befindet, die die Enden verbindet;
- Einführen des entnehmbaren Keils zwischen die um einen Abstand e beabstandeten Platten in der Weise, dass die zwei zweiten Enden des Keils die Dicke besitzen, die kleiner oder gleich der Strecke e ist, derart, dass die zweiten Enden nicht gleichzeitig mit den Platten in Kontakt sind;
- Ausführen der Drehung des entnehmbaren Keils entlang der Längsachse, derart, dass diese ersten Enden des entnehmbaren Keils mit den Platten in Kontakt gelangen;
- Verlöten des Tauschers; und
- Entnehmen des entnehmbaren Keils.

2. Verfahren nach Anspruch 1, **dadurch gekennzeichnet, dass** das Verfahren vor dem Schritt, in dem der entnehmbare Keil entnommen wird, einen Schritt umfasst, in dem die Drehung des entnehmbaren Keils entlang der Längsachse ausgeführt wird, derart, dass weder die ersten noch die zweiten Enden des entnehmbaren Keils gleichzeitig mit diesen Platten in Kontakt gelangen.

3. Verfahren nach einem der Ansprüche 1 oder 2, **dadurch gekennzeichnet, dass** der entnehmbare Keil einen im Wesentlichen konstanten Querschnitt entlang der Längsachse des Keils aufweist und dass dieser Querschnitt im Wesentlichen die Form eines Polygons aufweist, wobei zwei Punkte des Polygons die ersten Enden bilden, die um eine Strecke, die im Wesentlichen gleich e ist, beabstandet sind.

4. Verfahren nach Anspruch 3, **dadurch gekennzeichnet, dass** das Polygon eine Raute ist, deren Diagonale zwischen den ersten Enden im Wesentlichen die Länge e besitzt und deren andere Diagonale zwischen den zweiten Enden eine Länge kleiner als e besitzt.

5. Verfahren nach Anspruch 3, **dadurch gekennzeichnet, dass** das Polygon ein Hexagon mit zwei parallelen Hauptseiten und vier kleinen Segmenten, die paarweise verbunden sind, um jeweils eine Spitze an jedem Ende der Hauptseiten zu bilden, besitzt, wobei die Strecke zwischen diesen Spitzen gleich oder größer als e ist.

6. Verfahren nach einem der Ansprüche 1 oder 2, **dadurch gekennzeichnet, dass** der entnehmbare Keil einen im Wesentlichen konstanten Querschnitt entlang der Längsachse des Keils aufweist und dass dieser Querschnitt eine im Wesentlichen elliptische Form aufweist, wobei die beiden Enden der großen Achse der Ellipse die ersten Enden bilden, die um eine Strecke beabstandet sind, die im Wesentlichen gleich e ist.

7. Verfahren nach einem der vorhergehenden Ansprüche, **dadurch gekennzeichnet, dass** es einen Schritt umfasst, in dem der entnehmbare Keil in der Weise gewählt wird, dass er aus einem oder mehreren Materialien gebildet ist, deren Schmelztemperatur größer oder gleich 900 °C ist.

8. Verfahren nach einem der vorhergehenden Ansprüche, wobei die zwei ersten Enden um eine Strecke beabstandet sind, die im Wesentlichen gleich e ist.

9. Verfahren nach einem der Ansprüche 1 bis 7, wobei die zwei ersten Enden um eine Strecke beabstandet sind, die größer als e ist.
